# FASCICULE DE BREVET EUROPEEN

(11) **EP 1 818 615 B1**
(45) Date de publication et mention de la délivrance du brevet: **13.08.2008**
(21) Numéro de dépôt: 07101934.3
(22) Date de dépôt: 08.02.2007
(51) Int. Cl.: F23R 3/10, F23R 3/60, F23R 3/50, F23R 3/00

(54) **Chambre de combustion annulaire d'une turbomachine**
Ringförmige Brennkammer eines Turbotriebwerks
Annular combustion chamber of a turbomachine

(30) Priorité: 10.02.2006 FR 0650473
(43) Date de publication de la demande: 15.08.2007
(73) Titulaire: SNECMA, 75015 Paris (FR)
(72) Inventeur: De Sousa, Mario, 77240 Cesson (FR); Hernandez, Didier, 77720 Quiers (FR); Noel, Thomas, 94300 Vincennes (FR)
(74) Mandataire: Barbin le Bourhis, Joël

(56) Documents cités:
- EP-A2- 0 724 119
- FR-A1- 2 431 096
- US-B1- 6 513 330

## Description

L'invention concerne une chambre de combustion annulaire d'une turbomachine, du type comprenant une paroi interne, une paroi externe et un fond de chambre disposé entre lesdites parois dans la région amont de ladite chambre. Généralement, deux brides d'accrochage disposées en aval du fond de chambre permettent d'accrocher lesdites parois à d'autres parties de la turbomachine, souvent des carters interne et externe entourant la chambre de combustion.

Auparavant, lesdites parois interne et externe de la chambre étaient en métal ou en alliage métallique et il était nécessaire de refroidir ces parois pour qu'elles puissent supporter les températures atteintes lors du fonctionnement de la turbomachine.

Aujourd'hui, pour diminuer le débit d'air alloué au refroidissement de ces parois, on réalise celles-ci en matériau céramique plutôt qu'en métal. En effet, les matériaux céramiques résistent mieux aux hautes températures et possèdent une masse volumique plus faible que les métaux généralement utilisés. Les gains réalisés en air de refroidissement et en masse permettent d'améliorer le rendement de la turbomachine. Les matériaux céramiques utilisés sont, de préférence, des matériaux composites à matrice céramique, communément appelés CMC, choisis pour leurs bonnes propriétés mécaniques et leur capacité à conserver ces propriétés à hautes températures.

En ce qui concerne le fond de chambre, on réalise, de préférence, cette partie en métal ou en alliage métallique, plutôt qu'en matériau céramique, afin de pouvoir utiliser des méthodes de fixation connues et éprouvées à ce jour, comme le soudage, permettant de fixer sur ce fond de chambre, d'autres pièces (généralement des systèmes d'injection de carburant et des déflecteurs).

Or, les matériaux céramiques utilisés pour réaliser les parois présentent souvent un coefficient de dilatation environ trois fois inférieur à celui des matériaux métalliques utilisés pour réaliser le fond de chambre, de sorte que les parois interne et externe se dilatent et se rétractent moins que le fond de chambre, lors des variations de température de fonctionnement de la chambre. En d'autres termes, les écarts de variation entre les diamètres intérieur et extérieur du fond de chambre et les diamètres des parois, génèrent des contraintes dans ces pièces, lors du fonctionnement de la chambre. Ces contraintes peuvent être à l'origine de fissurations dans les parois, les matériaux céramiques étant, par nature, assez fragiles.

Pour résoudre ce problème, une solution décrite dans le document FR 2 855 249, consiste à prévoir une pluralité de pattes de fixation souples reliant le fond de chambre (réalisé en une seule pièce annulaire) audites parois, ces pattes étant capables de se déformer élastiquement en fonction des écarts de dilatation entre les pièces. L'inconvénient principal d'une telle structure réside dans le mauvais comportement dynamique, lors du fonctionnement de la turbomachine, des pattes de fixation souples et, il est souvent nécessaire de prévoir des systèmes d'amortissement pour limiter la déformation de ces pattes et les vibrations engendrées. En outre, il subsiste entre les pattes de fixation, des espaces par lesquels l'air frais s'engouffre dans la chambre de combustion, ce qui peut dégrader le rendement de celle-ci en favorisant la formation d'émissions polluantes comme, par exemple, des imbrûlés et/ou du monoxyde de carbone. Pour résoudre ce problème, une autre solution décrite dans le document EP-0 724 119-A consite à prévoir des joints entre les secteurs voisins.

L'invention vise à remédier à ces inconvénients, ou tout au moins à les atténuer, et a pour but de proposer une chambre de combustion présentant une structure alternative à la structure à pattes de fixation souples décrite dans FR 2 855 249, qui soit capable de s'adapter aux écarts de dilatation entre le fond de chambre et les parois externe et interne.

Pour atteindre ce but, l'invention a pour objet une chambre de combustion annulaire du type précité, dans laquelle ledit fond de chambre est divisé en plusieurs secteurs voisins, chaque secteur étant attaché auxdites parois, et caractérisée en ce que ledits secteurs présentent des bords latéraux tels que les bords latéraux de deux secteurs voisins se chevauchent.

Ainsi, les bords latéraux des secteurs du fond de chambre se déplacent les uns par rapport aux autres suivant les variations de température de fonctionnement de la chambre : lors d'une montée en température, chaque secteur se dilate et les bords latéraux des secteurs se rapprochent les uns des autres, tandis que lors d'une diminution de la température, les bords latéraux des secteurs s'écartent les uns des autres. De cette façon, lorsque la température varie, les diamètres intérieur et extérieur du fond de chambre varient moins que si le fond de chambre était en une seule pièce annulaire, ce qui génère moins de contraintes entre ce fond et les parois de la chambre.

A la température maximum de fonctionnement de la chambre, les bords latéraux des secteurs sont les plus rapprochés possible. Avantageusement, ils sont en contact de manière à limiter significativement, voire empêcher, le passage d'air frais entre eux, de l'extérieur vers l'intérieur de la chambre.

Avantageusement, ceci permet d'obtenir une bonne étanchéité entre secteurs. Lorsque les secteurs s'écartent (ou se rapprochent) les uns des autres, lesdits bords latéraux glissent l'un sur l'autre et l'étanchéité entre secteurs est maintenue. Selon un mode de réalisation, chaque secteur comprend une lèvre s'étendant le long d'un de ses bords latéraux, cette lèvre étant en saillie par rapport à l'une des faces (amont ou aval) de ce secteur et recouvrant le bord latéral du secteur voisin.

Comme expliqué plus haut, l'invention est particulièrement intéressante lorsque le fond de chambre est réalisé en métal ou en alliage métallique tandis que les parois intérieure et extérieure sont en matériaux céramiques et, notamment, en CMC. Toutefois, l'invention peut s'appliquer dans d'autres cas, par exemple avec un fond de chambre et des parois en matériaux métalliques, ou encore avec un fond de chambre et des parois en matériaux céramiques. Dans ces derniers exemples, où les problèmes liés aux écarts de dilatation entre les parois et le fond de chambre sont moins importants, voire inexistants, le fait de sectoriser le fond de chambre permet de favoriser l'assemblage du fond aux parois. En particulier, comme les secteurs sont plus souples qu'un fond de chambre annulaire monobloc, il se crée moins de contraintes entre ces pièces lors de leur assemblage. Cet assemblage est réalisé, par exemple, par boulonnage. On diminue ainsi le risque de voir ces pièces se casser au niveau de leurs points d'attache.

L'invention et ses avantages seront bien compris à la lecture de la description détaillée qui suit, d'un exemple de chambre de combustion selon l'invention, donné à titre illustratif et non limitatif. Cette description se réfère aux planches de dessins annexées sur lesquelles :
- la figure 1 est une vue schématique, en demi-section axiale, d'une partie de turbomachine équipée d'une chambre de combustion selon l'invention ;
- la figure 2 est une vue en perspective partielle, vue de l'amont, du fond de la chambre de combustion de la figure 1 ;
- la figure 3 est une vue de détail, en perspective, de deux secteurs du fond de chambre de la figure 2, vus de l'amont ;
- la figure 4 est une vue de détail, en perspective, d'un secteur du fond de chambre de la figure 2, vu de l'aval ;

L'invention se destine à tout type de turbomachine : turboréacteur, turbopropulseur, turbine à gaz terrestre... Dans l'exemple qui suit, on s'intéresse plus particulièrement à un turboréacteur d'avion.

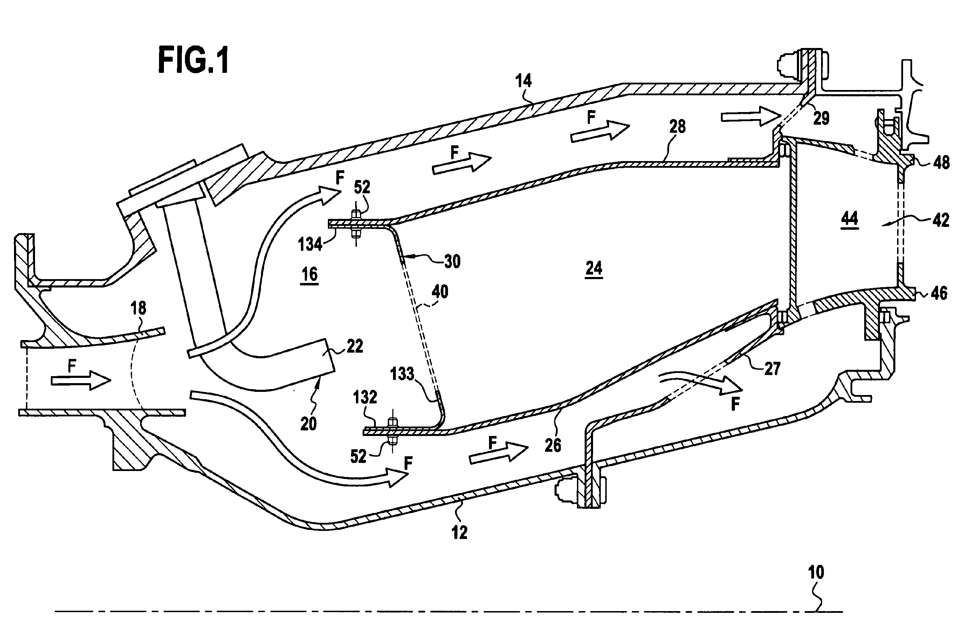

La figure 1 montre en demi-section axiale une partie de turboréacteur comprenant :
- une enveloppe circulaire interne ou carter interne 12, d'axe principal 10 correspondant à l'axe de rotation du turboréacteur ;
- une enveloppe circulaire externe ou carter externe 14, coaxial au carter interne 12 ;
- un espace annulaire 16 compris entre les deux carters 12 et 14 recevant le comburant comprimé, généralement de l'air, provenant en amont d'un compresseur (non représenté) du turboréacteur, au travers d'un conduit annulaire de diffusion 18.

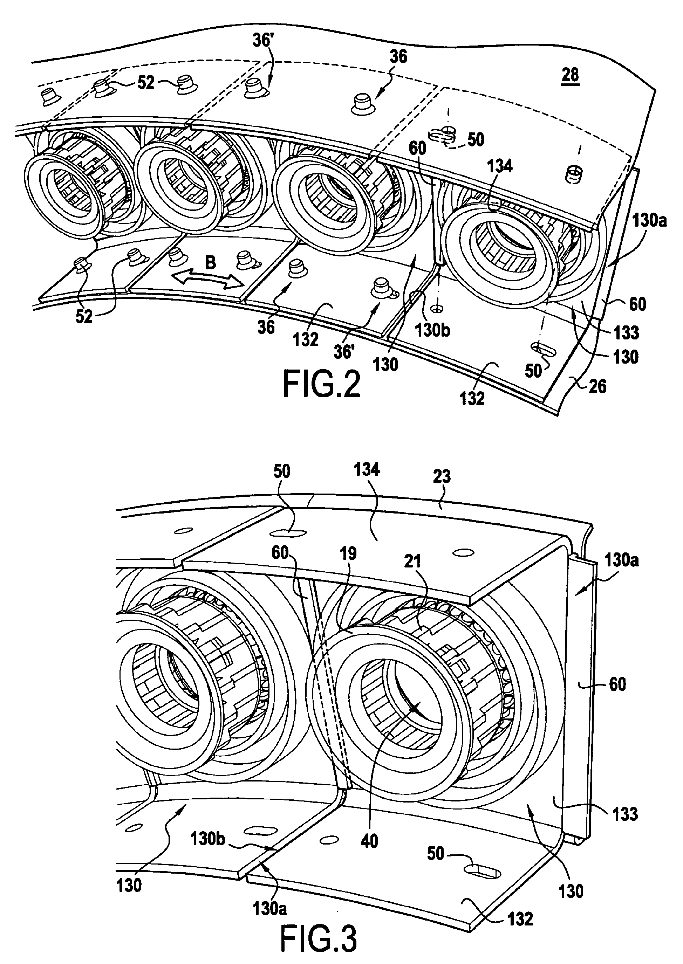

L'espace 16 comporte de l'amont vers l'aval, l'amont et l'aval étant définis par rapport au sens d'écoulement normal des gaz à l'intérieur du turboréacteur, indiqué par les flèches F :
- un ensemble d'injection pour injecter du carburant dans la chambre de combustion 24 décrite ci-après, cet ensemble d'injection étant formé d'une pluralité de systèmes d'injection 20 régulièrement répartis en amont de la chambre 24 et comportant chacun une buse d'injection de carburant 22 fixée sur le carter extérieur 14. Cette buse d'injection 22 est reliée à la chambre 24 par l'intermédiaire d'un système de maintien 19 et d'un mélangeur 21. Dans un souci de simplification, ces dernières pièces n'ont pas été représentées sur la figure 1, mais elles apparaissent sur les figures 2 à 4 ;
- une chambre de combustion 24 comprenant une paroi circulaire 26 radialement interne et une paroi circulaire 28 radialement externe, toutes deux coaxiales d'axe 10, et une paroi transversale qui constitue le fond 30 de cette chambre et qui est attachée aux extrémités amont des parois 26, 28. Ce fond de chambre 30 est pourvu d'orifices de passage 40 pour permettre l'injection du carburant, via les buses 22, et d'une partie du comburant, via le mélangeur 21, dans la chambre de combustion ;
- des brides d'accrochage interne 27 et externe 29, reliant respectivement les parois interne 26 et externe 28 aux carters interne 12 et externe 14 ; et
- un distributeur annulaire 42 en alliage métallique formant un étage d'entrée de turbine haute pression (non représentée) et comportant classiquement une pluralité d'aubes fixes 44 montées entre une plate-forme circulaire interne 46 et une plate-forme circulaire externe 48. Le distributeur 42 étant fixé aux carters 12 et 14 de la turbomachine par des moyens de fixation appropriés.

Le fond de chambre 30 est réalisé en alliage métallique, tandis que les parois 26 et 28 de la chambre 24 sont en matériau composite à matrice céramique, ou CMC.

Le fond de chambre 30 est divisé en plusieurs secteurs voisins 130. Chaque secteur 130 présente une partie centrale 133, orientée plutôt perpendiculairement à l'axe 10, et dans laquelle est ménagée au moins un orifice de passage 40. Cette partie centrale 133 se prolonge en bas et en haut par deux rabats 132, 134, orientés plutôt suivant l'axe 10, et attachés respectivement aux parois interne 26 et externe 28.

En référence à la figure 2, on va décrire la manière particulière dont les bords latéraux 130a, 130b de deux secteurs voisins 130 se chevauchent. Chaque secteur 130 comprend une lèvre 60 s'étendant le long d'un de ses bords latéraux 130a, de préférence, sur sensiblement toute la longueur de la partie centrale 133 de celui-ci. L'autre bord latéral du secteur est dépourvu de lèvre et sera dénommé ci-après bord simple 130b.

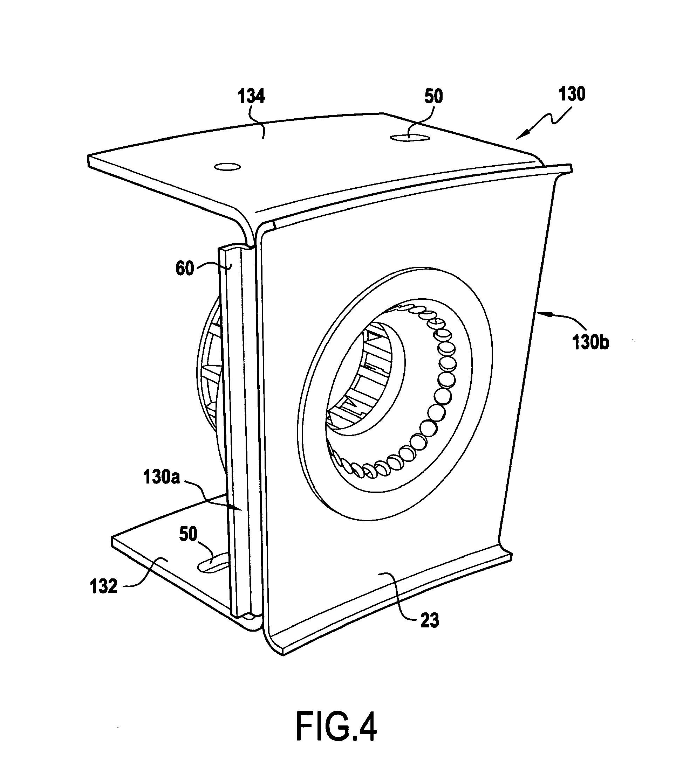

La lèvre 60 est en saillie par rapport à la partie centrale du secteur 130, vers l'amont ou aval, de manière à pouvoir recouvrir le bord simple 130b du secteur voisin. Dans l'exemple représenté sur la figure 4, la lèvre 60 est en saillie du côté de la face amont du secteur 130 ce qui permet, si nécessaire, de monter un déflecteur 23 sur la face aval de celui-ci.

La lèvre 60 peut être réalisée directement lors de la fabrication du secteur 130, ou lors d'une étape d'usinage ultérieure à sa fabrication. La lèvre 60 peut également consister en une bande rapportée, par exemple par soudage (par brasage), sur le bord latéral 130a du secteur.

Lorsque les secteurs 130 s'écartent les uns des autres, suite à la diminution de la température de fonctionnement de la chambre 24, le bord latéral 130a et la lèvre 60 d'un secteur s'écartent du bord latéral simple 130b du secteur voisin. La lèvre 60 est choisie suffisamment large pour éviter qu'il se crée, lors de l'écartement des secteurs 130, un jeu circonférentiel inter-secteur trop important. Lorsque la lèvre 60 est suffisamment large pour que le jeu circonférentiel entre secteurs 130 reste nul ou négatif, on empêche (ou tout au moins on limite significativement) le passage d'air frais entre les secteurs 130.

Toujours de façon à limiter, le passage d'air frais entre les secteurs, on fait en sorte que la face aval (ou amont) de la lèvre 60 soit au contact de la face amont (ou aval) du bord latéral simple 130b adjacent. Toutefois, si les frottements qui accompagnent ce contact sont trop importants et nuisent au déplacement relatif des secteurs 130, on peut laisser subsister un léger jeu axial entre ces faces, au détriment de l'étanchéité entre secteurs 130.

Selon un autre aspect de l'invention, chaque secteur de paroi 130 est attaché à au moins une des parois 26, 28 en deux points d'attache 36, 36', de manière à garantir une bonne fixation. Ceci permet également d'empêcher le secteur 130 de pivoter par rapport à cette paroi, autour d'un de ses points d'attache 36, 36'. Dans l'exemple, chaque secteur 130 est attaché à chacune des parois 26, 28, en deux points d'attache 36 et 36'.

Avantageusement, pour attacher le secteur 130 aux parois 26, 28, on utilise un système d'attache qui autorise le rapprochement ou l'écartement (selon la direction circonférentielle du fond de chambre) desdits deux points d'attache 36 et 36'. De cette manière on évite la création de contraintes dans la paroi concernée, lorsque les points d'attache 36 et 36' s'écartent (ou se rapprochent) l'un de l'autre à cause de la dilatation (ou de la rétractation) du secteur 130.

Un tel système d'attache correspond, par exemple, à un boulon 52 coopérant avec au moins un trou oblong 50 dont la largeur correspond sensiblement au diamètre de la vis du boulon 52. Ce trou oblong 50 peut être ménagé dans un rabat 132 (134) du secteur de fond de chambre 130, dans une paroi 26 (28) ou dans ces deux pièces à la fois. Dans l'exemple, on a choisi de réaliser un trou oblong 50 seulement dans les rabats 132, 134. Les trous réalisés dans les parois 26, 29, sont tous cylindriques, de diamètre correspondant à celui des vis des boulons 52 utilisés.

Chaque trou oblong 50 est orienté circonférentiellement (i.e. la longueur de chaque trou est orientée, suivant la circonférence du fond de chambre 30 annulaire) et le boulon 52 coopérant avec ce trou 50, peut donc se déplacer circonférentiellement, à l'intérieur du trou 50 comme indiqué par la double flèche B. Dans l'exemple des figures tous les points d'attache 36, 36', sont réalisés par boulonnage mais seul un point de fixation 36' sur deux est réalisé par boulonnage à travers un trou oblong 50. Pour simplifier les figures, tous les boulons 52 ne sont pas représentés.

Les secteurs 130 du fond de chambre 30 étant réalisés en matériau métallique, généralement en alliage métallique réfractaire, il est facile de fixer sur ceux-ci, par exemple par soudage (par brasage), les divers éléments d'un système d'injection de carburant 20, comme un système de maintien 19 et un mélangeur 21. Par ailleurs, si nécessaire, il est également possible de fixer sur la paroi aval de chaque secteur 130 un déflecteur 23 visant à protéger ce secteur 130 des gaz à hautes températures de la chambre de combustion. Un tel déflecteur 23 est optionnel et sa présence dépend principalement de la résistance propre, aux hautes températures, du matériau utilisé pour réaliser les segments 130.

## Revendications

1. Chambre de combustion annulaire (24) d'une turbomachine, comprenant une paroi interne (26), une paroi externe (28) et un fond de chambre (30) disposé entre lesdites parois dans la région amont de ladite chambre, le fond de chambre (30) étant divisé en plusieurs secteurs (130), chaque secteur étant attaché auxdites parois (26, 28), **caractérisée en ce que** lesdits secteurs (130) présentent des bords latéraux (130a, 130b) tels que les bords latéraux de deux secteurs voisins se chevauchent.

2. Chambre de combustion selon la revendication 1, **caractérisée en ce que** chaque secteur (130) comprend une lèvre (60) s'étendant le long d'un de ses bords latéraux (130a), cette lèvre étant en saillie par rapport à l'une des faces de ce secteur et recouvrant le bord latéral (130b) du secteur voisin.

3. Chambre de combustion selon la revendication 2, **caractérisée en ce que** chaque secteur (130) présente une partie centrale (133) prolongée par deux rabats (132, 134) attachés respectivement auxdites parois interne (26) et externe (28), ladite lèvre (60) s'étendant sensiblement sur toute la longueur de la partie centrale (133).

4. Chambre de combustion selon l'une quelconque des revendications 1 à 3, **caractérisée en ce que** chaque secteur (130) est attaché à au moins une paroi (26, 28) en deux points d'attache (36, 36').

5. Chambre de combustion selon la revendication 4, **caractérisée en ce qu'**elle comprend un système d'attache dudit secteur (130) à ladite au moins une paroi (26, 28), qui autorise le rapprochement ou l'écartement desdits deux points d'attache (36, 36').

6. Chambre de combustion selon la revendication 5, **caractérisée en ce que** ledit système d'attache correspond à une attache par boulonnage à travers au moins un trou oblong (50).

7. Chambre de combustion selon l'une quelconque des revendications 1 à 6, **caractérisée en ce que** le fond de chambre (30) est en métal ou en alliage métallique, tandis que les parois (26, 28) sont en matériau céramique.

8. Chambre de combustion selon l'une quelconque des revendications 1 à 7, **caractérisée en ce que** chaque secteur (130) du fond de chambre (30) est équipé d'un déflecteur (23).

9. Turbomachine comprenant une chambre de combustion (24) selon l'une quelconque des revendications précédentes.

## Claims

1. Annular combustion chamber (24) of a turbomachine, including an inner wall (26), an outer wall (28) and a chamber bottom (30) arranged between said walls in the upstream region of said chamber, the chamber bottom (30) being divided into several sectors (130), each sector being attached to said walls (26, 28), **characterized in that** said sectors (130) present lateral edges (130a, 130b) such that the lateral edges of two adjacent sectors overlap.

2. Combustion chamber according to claim 1, **characterised in that** each sector (130) includes a lip (60) extending along one of its lateral edges (130a), this lip projecting relative to one of the faces of this sector and covering the lateral edge (130b) of the adjacent sector.

3. Combustion chamber according to claim 2, **characterised in that** each sector (130) has a central part (133) extended by two returns (132, 134) attached respectively to said inner (26) and outer (28) walls, said lip (60) extending substantially over the full length of the central part (133).

4. Combustion chamber according to any one of claims 1 to 3, **characterised in that** each sector (130) is attached to at least one wall (26, 28) at two points of attachment (36, 36').

5. Combustion chamber according to claim 4, **characterised in that** it includes a system of attachment of said sector (130) to said at least one wall (26, 28), which enables said two points of attachment (36, 36') to move closer together or further apart.

6. Combustion chamber according to claim 5, **characterised in that** said system of attachment corresponds to an attachment by bolting through at least one oblong hole (50).

7. Combustion chamber according to any one of claims 1 to 6, **characterised in that** the chamber bottom (30) is made of metal or metal alloy, whereas the walls (26, 28) are made of ceramic material.

8. Combustion chamber according to any one of claims 1 to 7, **characterised in that** each sector (130) of the chamber bottom (30) is equipped with a baffle (23).

9. Turbomachine including a combustion chamber (24) according to any one of the preceding claims.

## Patentansprüche

1. Ringförmige Brennkammer (24) einer Turbomaschine, mit einer Innenwand (26), einer Außenwand (28) und einem Kammerboden (30), der zwischen den genannten Wänden im stromaufwärtigen Bereich der Kammer angeordnet ist, wobei der Kammerboden (30) in mehrere Abschnitte (130) unterteilt ist, wobei jeder Abschnitt an den Wänden (26, 28) befestigt ist, **dadurch gekennzeichnet, daß** die Abschnitte (130) Seitenränder (130a, 130b) aufweisen, die derart sind, daß sich die Seitenränder von zwei benachbarten Abschnitten überlappen.

2. Brennkammer nach Anspruch 1, **dadurch gekennzeichnet, daß** jeder Abschnitt (130) eine Lippe (60) aufweist, die sich entlang einem seiner Seitenränder (130a) erstreckt, wobei diese Lippe gegenüber der einen der Flächen dieses Abschnitts vorspringt und den Seitenrand (130b) des benachbarten Abschnitts überdeckt.

3. Brennkammer nach Anspruch 2, **dadurch gekennzeichnet, daß** jeder Abschnitt (130) einen mittleren Teil (133) aufweist, der durch zwei Umschläge (132, 134) verlängert ist, die an der Innenwand (26) bzw. an der Außenwand (28) befestigt sind, wobei sich die Lippe (60) im wesentlichen über die gesamte Länge des mittleren Teils (133) erstreckt.

4. Brennkammer nach irgendeinem der Ansprüche 1 bis 3, **dadurch gekennzeichnet, daß** jeder Abschnitt (130) an wenigstens einer Wand (26, 28) an zwei Befestigungspunkten (36, 36') befestigt ist.

5. Brennkammer nach Anspruch 4, **dadurch gekennzeichnet, daß** sie ein System zum Befestigen des Abschnitts (130) an der wenigstens einen Wand (26, 28) umfaßt, welches das Annähern oder das Entfernen der zwei Befestigungspunkte (36, 36') zuläßt.

6. Brennkammer nach Anspruch 5, **dadurch gekennzeichnet, daß** das Befestigungssystem einer Befestigung mittels Verbolzen durch wenigstens ein Langloch (50) entspricht.

7. Brennkammer nach irgendeinem der Ansprüche 1 bis 6, **dadurch gekennzeichnet, daß** der Kammerboden (30) aus Metall oder Metallegierung besteht, während die Wände (26, 28) aus Keramikmaterial bestehen.

8. Brennkammer nach irgendeinem der Ansprüche 1 bis 7, **dadurch gekennzeichnet, daß** jeder Abschnitt (130) des Kammerbodens (30) mit einer Ablenkeinrichtung (23) ausgestattet ist.

9. Turbomaschine, die eine Brennkammer (24) nach irgendeinem der vorhergehenden Ansprüche umfaßt.
